(19) Europäisches Patentamt
European Patent Office
Office européen des brevets

(11) **EP 2 181 791 B1**

(12) **EUROPEAN PATENT SPECIFICATION**

(45) Date of publication and mention
of the grant of the patent:
**03.07.2019 Bulletin 2019/27**

(51) Int Cl.:
**B23Q 17/24** *(2006.01)* **B23H 1/02** *(2006.01)*
**B23H 7/00** *(2006.01)* **B23H 11/00** *(2006.01)*
**B23H 7/06** *(2006.01)* **B23H 1/00** *(2006.01)*

(21) Application number: **09174116.5**

(22) Date of filing: **27.10.2009**

(54) **Machine of electrical discharge machining and positioning method for this machine**

Maschine zur Funkenerosionsverarbeitung und Positionierungsverfahren für diese Maschine

Machine d'usinage par électroérosion et procédé de positionnement pour cette machine

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **28.10.2008 CH 16932008**

(43) Date of publication of application:
**05.05.2010 Bulletin 2010/18**

(73) Proprietor: **Agie Charmilles SA**
**6616 Losone (CH)**

(72) Inventors:
• **Förster, Ralf**
**12623, Berlin (DE)**
• **Wälder, Georg**
**01710, Thoiry-Allemogne (FR)**
• **Diot, Jean-Claude**
**74160, Saint Julien en Genevois (FR)**

(74) Representative: **Fenner, Seraina et al**
**Georg Fischer AG**
**Amsler-Laffon-Strasse 9**
**8201 Schaffhausen (CH)**

(56) References cited:
**EP-A1- 1 527 852      EP-A2- 1 481 772**
**JP-A- 61 061 721**

**EP 2 181 791 B1**

**Description**

The present invention relates to a machine for electrical discharge machining comprising a tool intended to machine a workpiece under the effect of electrical erosive discharges, a stand and a mechanical assembly making it possible to effect relative movements between the tool and the workpiece, a first assembly comprising the tool and tool attachment members capable of being attached to a first part of the machine, a second assembly comprising the workpiece capable of being attached to a second part of the machine. Such a machine and method are known from JP61061721A, which discloses the features of the preamble of claims 1 and 11.

A typical problem that an electrical discharge machinist has to overcome is that of exactly identifying the active part of a tool with respect to the geometric frame of reference of the machine or of identifying a characteristic part such as a face of the workpiece with respect to the same frame of reference.

This problem is generally solved in two stages. In a first stage, the tool or the workpiece are identified with respect to the frame of reference of the tool holder or of the pallet, using a pre-adjusting rig. In a second stage, the attachment system of the electrical discharge machine provides an exact positioning of the tool holder or of the pallet with respect to the geometric frame of reference of the machine. These attachment devices have to be precise, rigid and resistant to wear. They make the installation considerably more expensive.

The present invention seeks to find a solution that will make it possible to achieve excellent precision on the finished component in spite of the use of attachment systems that are less precise and therefore more economical.

Furthermore, in work that demands excellent precision, users are continuously faced with problems of slow geometric deviations. Generally, these are brought about by thermal deformation. The machine undergoes expansion and contraction, together with angular deformations in its structure as a result of variations in temperature. Precision machines are installed in very expensive climate-controlled areas poorly suited to mass-production operations. The critical parts of some machines are temperature stabilized, thus making their structure considerably more complicated. A further object of the present invention is to find solutions able to compensate at the workpiece level for the effect of slow deviations of all kinds. These may be deviations that are thermal in origin, but also deviations in workpieces which deform during a machining operation as a result of the progressive release of internal tensions introduced through a previous annealing operation.

The mass of a workpiece can also vary considerably during a lengthy machining operation and cause the stand of the machine to contract, thereby introducing a buildup of errors into the component.

The present invention is able to remedy all these aforementioned problems and the machine for electrical discharge machining is, to this end, characterized by having all the features of claim 1. Such a machine has a detection device (comprising an optical detection appliance fixed by means of an attachment to a part of the machine and capable of viewing at least a first identification feature situated on the first assembly along a predetermined optical axis that is fixed with respect to the said attachment, the optical detection appliance being arranged in such a way as to view at least one second identification feature situated on the second assembly along the same predetermined optical axis so as to make it possible to detect any relative geometric deviation between the first and second assemblies and to correct this geometric deviation.

By virtue of these features, the position of the tool and of the workpiece, and of their fixing and attachment elements, can be determined very precisely without offset and in a simple and inexpensive way. It is thus possible to determine any geometric deviation and correct it in order to obtain high-precision machining without having to resort to expensive attachment systems, to climate-controlled areas and/or to complex temperature-stabilizing devices.

Advantageously, the attachment members comprise a tool holder to which the tool is fixed and which collaborates with mounting elements connected to a sliding block mounted such that it can slide along an axis Z of the machine, the optical detection appliance being fixed to the mounting elements or to the sliding block and capable of viewing along the same predetermined optical axis, on the one hand, at least the first identification feature situated on the tool or on its tool holder and, on the other hand, at least the second identification feature situated on the workpiece or its fixing elements.

This then provides good precision in the positioning or repositioning of the tool with respect to the workpiece, and therefore high machining precision, while at the same time benefiting from being of a simple, reliable and inexpensive design.

One very advantageous embodiment is characterized in that the mounting elements comprise a chuck collaborating with the tool holder and mounted so that it can rotate about an axis C parallel to the axis Z in a fixing piece or on the sliding block, the optical detection appliance being mounted on the fixing piece or on the sliding block and capable of identifying, along the same predetermined optical axis, the first and second identification features through openings provided in the chuck and/or the tool holder.

By virtue of this design, any geometric deviation is detected and monitored very precisely and easily without the need to remove the tool holder.

Advantageously, the tool holder has at least one projecting portion capable of occupying a position facing the optical detection appliance, the said first identification feature being situated on this projecting portion.

These features allow for a particularly simple design. Existing machines can also be retro-fitted with the detection device of the invention.

Advantageously, the first and/or second assemblies are mounted such that they can rotate about an axis of rotation C so that at least two identification features can be viewed in succession on the first and/or the second assembly along the same optical axis so as to permit the detection of homothetic deformations of the tool and of its attachment members and/or of the workpiece and of its fixing elements. What is meant here by "homothetic deformations" is all the low-amplitude expansion or contraction phenomena by which mechanical components may be affected. By virtue of these features, it is possible to obtain very precise (re)positioning of the tool with respect to the workpiece, and therefore even better machining precision.

The optical detection appliance is preferably a CCD camera.

The invention also relates to a positioning method for a machine for electrical discharge machining comprising a tool intended to machine a workpiece under the effect of electrical erosive discharges, a stand and a mechanical assembly making it possible to effect relative movements between the tool and the workpiece, a first assembly comprising the tool and attachment members for attaching the tool to a first part of the machine, a second assembly comprising the workpiece and fixing elements for fixing the workpiece to a second part of the machine, characterized in that the position of the tool and of the workpiece on the machine is checked using a detection device comprising an optical detection appliance by viewing at least one first identification feature situated on the first assembly along a predetermined optical axis and by viewing at least one second identification feature situated on the second assembly along the same predetermined optical axis in such a way as to permit the detection of any relative geometric deviation between the first and second assembly and correct this geometric deviation.

Other advantages will become apparent from the features listed in the dependent claims and from the description which set the invention out in greater detail with the aid of drawings which schematically and by way of example depict embodiments and variants and which comprise the following figures:

Figure 1 which illustrates a first embodiment, in perspective.
Figure 2 which shows a detail of Figure 1.
Figures 3a, 3b and 3c which are views in longitudinal and transverse section of part of Figure 1.
Figure 4 which shows a variant, in perspective.
Figure 5 which is a partial perspective view of a second embodiment.
Figure 6 which illustrates a method for correcting geometric deviations of all origins.

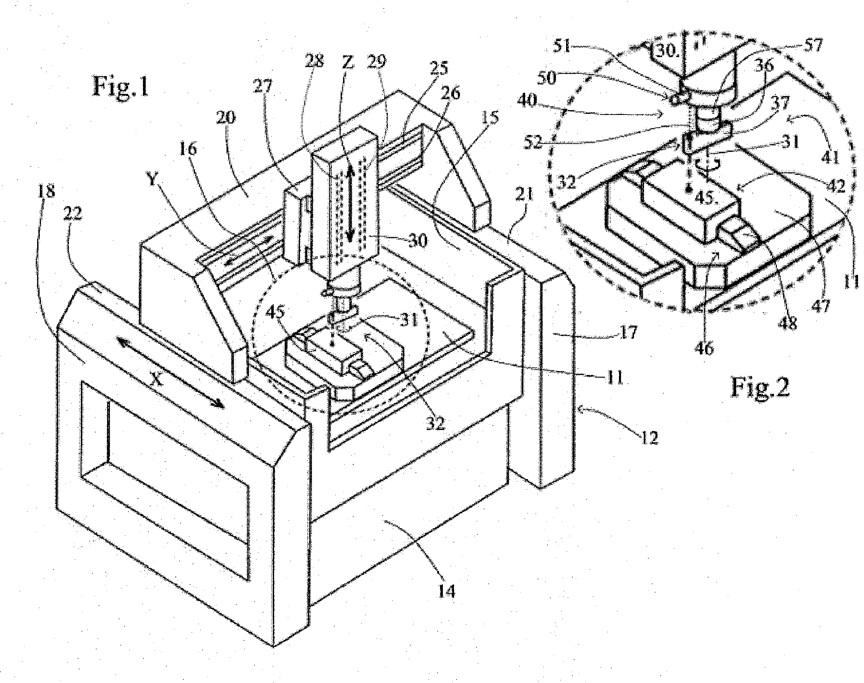

With reference to Figures 1 and 2, the first embodiment of the machine in question for electrical discharge machining has a large-sized architecture that makes it particularly sensitive to thermal deviations and other geometric deviations. It comprises a horizontal work table 11 resting on a fixed stand 12 comprising, at its base, a reservoir 14 of dielectric liquid. The work tale 11 is arranged in a work tank 15 surrounding the machine zone 16. The operator gains access to the work table via a door, not depicted, provided in the front face of the work tank 15.

The stand 12 has two lateral walls 17, 18, consisting of hollowed-out legs and on which there rests a gantry 20 that slides along two first parallel and horizontal slideways 21, 22 mounted on the upper part of the two legs 17, 18.

These first slideways 21, 22 allow the gantry 20 to move along the linear axis X of the machine.

Two parallel and horizontal second slideways 25, 26 can be found inside the gantry 20. They allow a carriage 27 to move along a linear axis Y perpendicular to the axis X of the machine. The carriage 27 in turn, via third slideways 28, 29, supports a sliding block 30 which moves vertically with respect to the carriage 27 along an axis Z of the machine which is perpendicular to the axes X and Y.

The machine in this embodiment is therefore equipped with three linear axes X, Y, Z. A rotary spindle 31, of which the axis is vertical parallel to the axis Z is provided at the lower part of the sliding block 30. The assembly thus created forms a machining head 32. This may be a milling spindle or an axis C of an electrical discharge machine.

The rotary spindle 31 is fitted with a chuck 57 in which there is fixed a tool holder 36 which holds the tool 37 by means of a rigid attachment.

The tool holder 36 and its chuck 57 constitute the attachment members 40 of the tool 37. The latter with its attachment members forms a first assembly 41.

A second assembly 42 comprises the workpiece 45 with its fixing elements 46. The latter include a pallet 47 fixed by another rigid attachment to the work bed 11. The workpiece 45 is held on the pallet 47 by jaws 48 of a holding clamp.

The tool 37 is intended to machine the workpiece 45 under the effect of electrical erosive discharges produced by a generator which has not been depicted. A mechanical assembly comprising the linear axes X, Y, Z and the rotary axis C controlled by a numerical control unit, allows relative movement between the tool and the workpiece to be effected.

Automatic means which have not been depicted in the figures, such as tool changers, pallet changers or handling robots, allow the pallet 47 and the workpiece or workpieces 47 it is carrying to be removed when the machining operation is over. The tool holder 36 may also be removed automatically. A new pallet and/or a new tool holder are then loaded onto the machine in order to continue the machining operations.

The machine comprises a device 50 for detecting the positioning of the tool 37 and of the workpiece 45 on the machine. The device 50 comprises an optical detection appliance 51 capable of viewing at least a first identification feature situated on the first assembly 41, namely on the tool and/or on its attachment members 40, along a predetermined optical axis 52 that is also fixed with respect to the attachment to the machine of the optical detection device 51. The optical detection appliance 51 is also arranged in such a way as to view at least one second identification feature situated on the second assembly 42, namely the workpiece 45 and/or its fixing elements 46, along the same predetermined optical axis 52 so as to permit detection of any geometric deviation of the first or of the second assembly 41, 42.

One of the objects of the invention is to ensure that with the tool 37 in place, the optical detection appliance 51 first of all views at least one identification feature $P_1$, $P_2$ specific to the tool 37 or to the said first assembly 41. In a second phase, a movement of the tool 37 uncovers the field of view of the optical detection appliance and allows it to view at least one identification feature $P_{11}$, $P_{12}$ specific to the workpiece 45 or to the second assembly 42. The said movement of the tool 37 may be performed simply by removing the tool holder 36 from the chuck 57. Another way of effecting the said tool movement may be to rotate the axis C. An arrangement such as this advantageously makes it possible to minimize the distance between the optical axis and the centre of inertia of the tool or even to eliminate this distance. In the foregoing statement it goes without saying that the ideas of tool and workpiece are interchangeable. The same measures may be applied either to the tool or to the workpiece. In addition, on an electrical discharge machine, these two ideas differ only through the polarity of the machining voltage applied. In consequence, the general premise adopted will be that at least one part of the first assembly 40 can be moved from a first position in which the optical detection appliance 51 views the said at least one first identification feature on the first assembly 40 along the said optical axis, into a second position in which the optical detection appliance 51 views the said at least one second identification feature on the second assembly 42 along the same optical axis.

The optical detection appliance is, in this embodiment, a CCD (charge coupled detector or charge coupled device) camera.

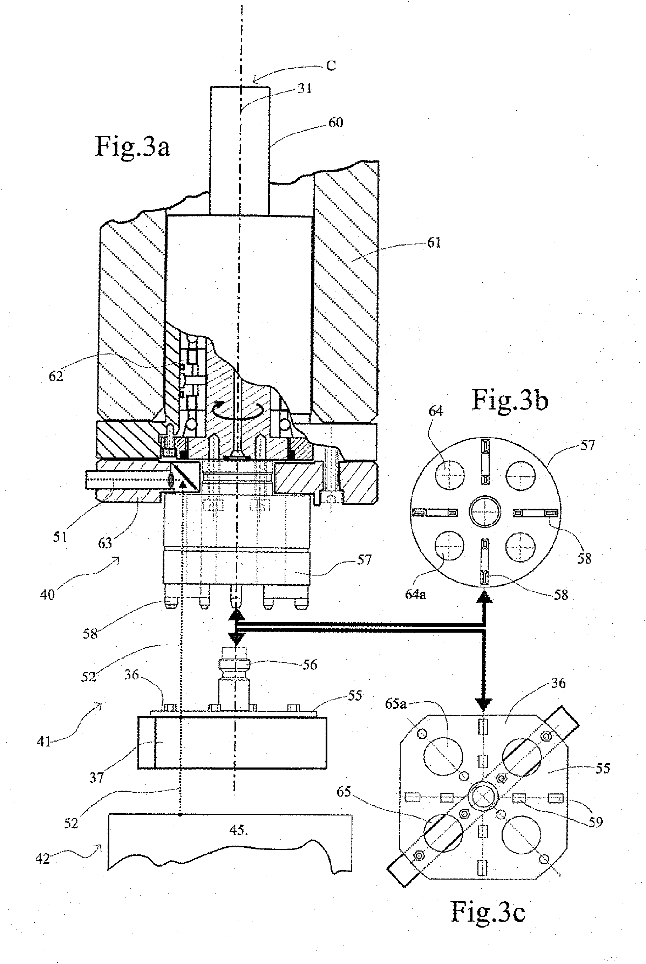

With reference to Figures 3a, 3b, 3c, the tool 37 is fixed by means of four bolts to the tool holder 36. The latter comprises a spring steel plate 55 and a central rod 56 intended to collaborate with the chuck 57 to form rigid mounting and attachment elements. On the chuck 57, four pyramid-shaped studs 58 made of hard metal position the tool holder 36 by fitting into openings 59 made in the plate 55.

The chuck 57 is screwed onto a shaft 60 that forms the axis C. This shaft is mounted so that it can rotate in a fixing piece 61 by virtue of a rolling bearing 62. The fixing piece 61 is rigidly attached to the sliding block 30 of Figure 1.

The optical detection appliance 51 is mounted on the fixing piece 61 or on the sliding block 30 by means of a mounting ring 63. It allows identification features located on the tool 37 or on the tool holder 36 to be viewed along the optical axis 52 by virtue of bores 64, 65 provided in the chuck 57 and the plate 55.

When the tool 37 is removed or rotated through 90°, the optical detection appliance 51 can view other identification features on the workpiece 45 or its fixing elements 46 along the same optical axis 52, which remains fixed, and can do so through the bores 64a, 65a provided in the chuck 57 and the plate 55. The optical detection appliance 51 is a CCD camera with a fixed mirror or return prism making it possible to detect, to measure and to correct any geometric deviation of the tool 37, of the tool holder 36, of the workpiece or workpieces 45, of the pallet 47 and of the work table 11 by effecting movements along the axes X, Y, Z and/or about C. This CCD camera comprises illuminating elements, for example in the form of a ring of light-emitting diodes intended to illuminate the surface on which the identification features are to be detected and measured. Its optical axis 52 is parallel to the axis of rotation C. The two axes are only a few centimetres apart.

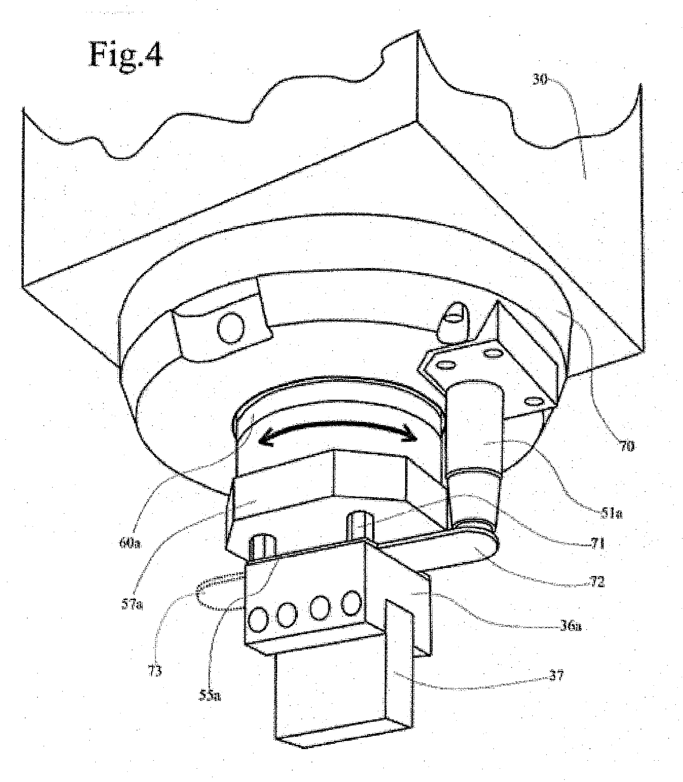

According to an alternative variant depicted in Figure 4, the CCD camera 51a is fixed to the protective shroud 70 of a shaft 60a of axis C mounted to rotate in the sliding block 30. The axis C rotates a chuck 57a which rigidly holds a tool holder 36a to which the tool 37 is fixed. The positioning of the tool holder 36a in the chuck 57a is provided by four abutment pieces 71. The tool holder 36a comprises a spring steel plate 55a extended by a projecting portion in the form of a tongue 72 capable of occupying a position facing the CCD camera 51a. This tongue has at least one identification feature that can be viewed by the camera in order to detect geometric deviations of the tool holder and of the tool.

According to a variant, the plate 55a comprises at least one second tongue 73 which may be positioned facing the camera 51a by rotating the chuck 57a about the axis C. By measuring the positioning of identification features on the two tongues 72, 73 it is possible to evaluate geometric deviations of a homothetic type.

According to some variants, the tool holder 36a could be equipped with several tongues or with an annular region capable of being positioned in front of the camera 51a, thus making it possible to compensate for deviations between the tool holder axis and the axis of the camera, and deviations specific to the tool. The tongue or tongues attached to the tool holder or to the tool allow the camera to reposition the tool or the tool holder in its frame of reference in spite of the distance separating the axes of the tool holder and of the camera.

When the tool holder 36a is removed or rotated through a predetermined angle, the CCD camera 51a is able to view one or more identification features situated on the workpiece and/or its fixing elements in order to determine any geometric deviation of these elements that there might be.

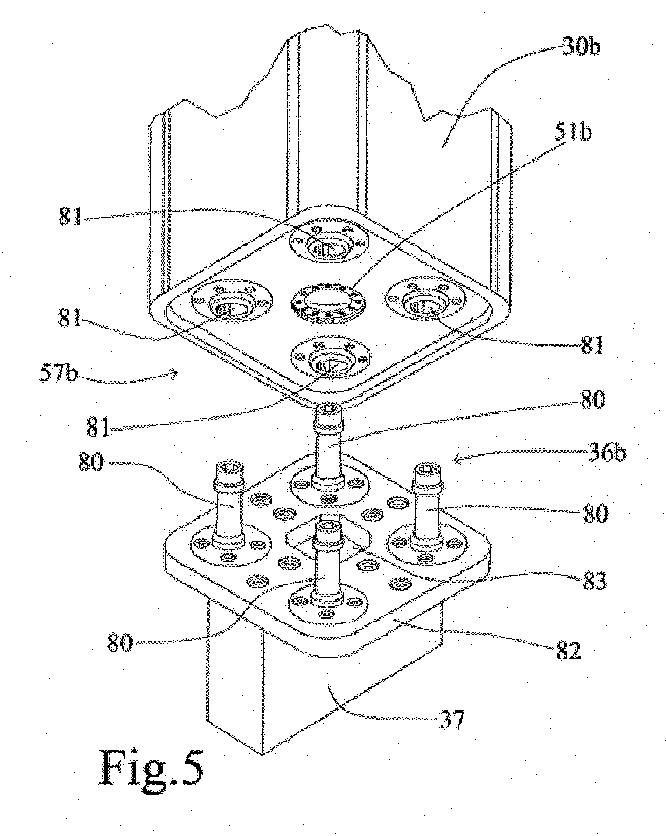

Figure 5 illustrates another embodiment of the invention. Here again we find the lower part of the sliding block 30b of the machine depicted in Figure 1, but in this instance, the machine does not have an axis C. However, the chuck 57b characterized by an attachment comprising four conical couplings 81, could very well be housed in an axis C in an embodiment similar to the one depicted in Figures 3a, b and c.

The tube holder 36b, which may also act as a workpiece holder or as a pallet, comprises four rods 80 intended to fit into corresponding orifices 81 of the chuck 57b. The four rods 80 are bolted to a relatively thick support plate 82 that constitutes the base of the tool holder 36b, to which plate a tool electrode 37 may, for example, be fixed.

The special feature of this embodiment is that a CCD camera 51b is incorporated into the chuck 57b between the orifices 81 and equidistant from each of them. Furthermore, the support plate 82 is equipped with a through-orifice 83 at its centre.

An arrangement such as this affords certain advantages over the previous embodiments:
When the tool holder 36b is attached to the chuck 57b, the camera 51b can look directly at the tool 37 on its upper face, through the orifice 83 rather than looking at some component of the tool holder. This makes it possible to simplify the operation of mounting and setting up the tool 37b on its tool holder 36b. The tool can be fixed directly to the tool holder without the need to identify the position of the tool frame of reference with respect to the tool holder frame of reference.

It is therefore advantageous to install the tool 37 and its tool holder 36b in such a way that the optical axis of the camera 51b is close to the centre of inertia of the tool. In this way, the geometric deviations specific to the tool will be minimized. When the tool holder is removed, the CCD camera is able to look directly at the workpiece along the same optical axis.

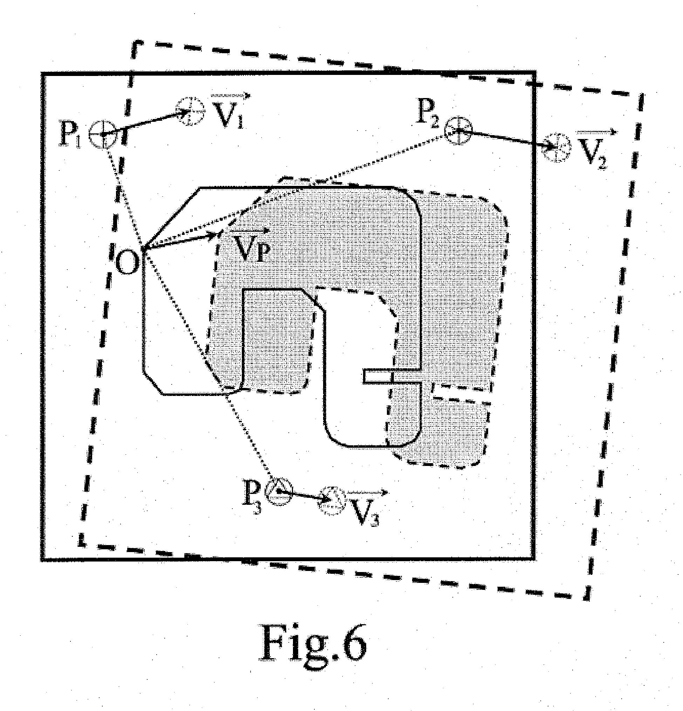

Figure 6 is a symbolic depiction of a simplified method for measuring and correcting the geometric deviations of all origins using the invention.

It should however be assumed that these deviations are consistent in their nature, that is to say that all the regions observed are subject to the same influences. The square drawn in solid line symbolizes the initial periphery of a work piece that is to be machined.

The arbitrary shape in solid line inside that same square symbolizes a periphery within which, or at the boundary of which, the machining is to be done.

The corresponding shapes drawn in dotted line of the workpiece and of the machining symbolize an overall geometric deviation of the whole. In Figure 6, the shapes drawn in dotted line have been obtained by applying to the corresponding shapes drawn in solid line translational displacements, rotational displacements and homothetic (proportional) displacements of deliberately excessive magnitude with a view to making the concept easier to understand. It should be noted that the rotation or rotations and the homothetic displacement or displacements may in actual fact be only of moderate amounts in order to remain consistent with what an electrical discharge machine would be likely to experience in terms of thermal or some other deviation.

Prior to the machining operation, the CCD camera is used to identify the positions of three target points $P_1$, $P_2$, $P_3$ on the upper surface of a workpiece attached to the table of the machine. To simplify the illustration, we consider three points, but the result would be even better the higher the number of calculation points we used. The three points $P_1$, $P_2$, $P_3$ constitute the said identification features, such as characteristic textures.

It is assumed that the geometry deviates slowly but uniformly during machining. In addition, it is possible to determine an approximate period T within which it is reckoned that the geometric deviations will produce errors that are tolerable. For example, it may be known that in quarter of an hour the errors will not exceed the 5 microns that can be tolerated.

Machining will therefore be interrupted every ¼ of an hour in order to find, using the camera, the new position of the target points $P_1$, $P_2$, $P_3$ which have moved along three vectors $\vec{V}_1$, $\vec{V}_2$, $\vec{V}_3$. It should be noted that there is no need to determine any mathematical model describing the said displacement. All that is required is to measure by how much each has moved.

Let t be the intermediate time that elapsed during the 2nd quarter-hour period over which machining continues. This intermediate time t being normalized, varies from 0 to 1 from the start to the end of the ¼-hour machining period $T$.

Each point O in the zone that is to be machined has to be repositioned in order to take account of the deviations experienced by the workpiece. The correction that has to be applied to the point O is, for example, a vector $\vec{V}_p$ in accordance with the formula:

$$\vec{V_p} = (1+t) \frac{\vec{V_1}.OP_1 + \vec{V_2}.OP_2 + \vec{V_3}.OP_3}{(1/OP_1) + (1/OP_2) + (1/OP_3)}$$

The quantities $\vec{V_p}, \vec{V_1}, \vec{V_2}, \vec{V_3}$ are vectors; the other quantities $OP_1, OP_2, OP_3$ are scalar quantities corresponding to the distances separating the point $O$ from the initial target points $P_1, P_2$ or $P_3$.

The method continues in this way from one ¼-hour to another ¼-hour.

In general, the correction that needs to be applied to $O$ is a mean of the harmonic type of the displacements experienced by the initial target points $P_1, P_2$ or $P_3$; this mean being extrapolated in the next machining period.

A similar mean of harmonic type is calculated for any number of measured target points. A minimum of two points are needed. This is expressed for a number n of target points using the following formula:

$$\vec{V_p} = (1+t) \frac{\left( \sum_{i=1}^{n} \vec{V_i}.OP_i \right)}{\left( \sum_{i=1}^{n} OP_i^{-1} \right)}$$

In practice, it has been found that a quadratic-type mean using the following formula provides even greater correction precision:

$$\vec{V_p} = (1+t) \frac{\vec{V_1}.OP_1^2 + \vec{V_2}.OP_2^2 + \vec{V_3}.OP_3^2}{(1/OP_1^2) + (1/OP_2^2) + (1/OP_3^2)}$$

for three initial target points $P_1, P_2$ or $P_3$
which formula can be generalized for n points, into the following expression:

$$\vec{V_p} = (1+t) \frac{\left( \sum_{i=1}^{n} \vec{V_i}.OP_i^2 \right)}{\left( \sum_{i=1}^{n} OP_i^{-2} \right)}$$

It is obvious that the measured points have to lie outside of the zone that is to be machined, otherwise they would be liable to disappear for subsequent measurements.

As far as the correction of geometric deviations experienced by the tool is concerned, the procedure is similar, using at least two identification features.

In general, a correction is applied to the points $O$ of the workpiece and/or of the tool by calculating a mean deviation $\vec{V_p}$ from the geometric deviations $\vec{V_1}, \vec{V_2}, \vec{V_3}$ measured for at least two initial target points $P_1, P_2$ or $P_3$ corresponding to the said identification features. The said mean deviation $\vec{V_p}$ may for example be of a harmonic or quadratic type of the geometric deviations $\vec{V_1}, \vec{V_2}, \vec{V_3}$ measured for the said at least two initial target points $P_1, P_2$ or $P_3$ corresponding

to the said identification features. As far as identification features for the target points $P_1$, $P_2$ or $P_3$ are concerned, it is possible to use the natural texture of a metallic surface without there being any need to impart any pre-established image to this surface. Each region of the surface has a microscopic structure that is sufficiently differentiated that it can be recognized at a later date by a CCD camera in the same way as can a fingerprint. Texture recognition operates reliably on ground, unpolished surfaces. The surfaces obtained by electrical discharge machining are even better suited to the method.

Image analysis makes it possible, within an analysis boundary of a few millimetres, to detect the movement of an image in a direction perpendicular to the optical axis with a precision better than can be obtained by the measurement rules installed on the linear axes of the machine. In addition, it is possible to measure a position in the direction parallel to the optical axis (dimension Z) with a precision similar to that of these same rules. For example, a precision of plus or minus 0.0002 mm is achieved in XY; and of 0.002 mm in Z.

The XY measurement is even possible under working conditions with work being performed on a workpiece surface wetted by the machining liquid and despite the presence of impurities.

Image analysis makes it possible to determine the geometric deviations, the offsets and rotations between an image stored in memory, with which an ideal XY position is associated, and a real image which has moved with respect to the previous one. The mathematical method is based on the recognition of morphology as described in "Texture mapping by successive refinement" by Stefan Horbelt, Philippe Thévenaza and Michael Unser, Biomedical Imaging Group, IOA, DMT, EPFL and in "Verschiebungsanalyse auf Basis der Grauwertkorrelation" Chemnitzer Werkstoffmechanik GmbH (http://www.cwm-chemnitz.de/techniques/unidac. html) .

The image analysis software may be embedded in a PC external to the numerical control of the machine and provide it with the geometric information it needs to effect the corrections. These functions could also be incorporated into the numerical control.

The method of recognizing identification features proves to be astonishingly robust in the field of electrical discharge. The target texture can be identified in spite of the fact that the workpiece is covered with a film of dielectric liquid sullied with machining debris.

The procedures for setting up the tool and the workpiece are set out hereinafter and are dependent on the design of the electrical discharge machine, particularly on whether or not this machine has a rotation axis C.

A) Procedure for setting up a tool with an axis C.

List of operations on the pre-setting rig:

A1) Fix the tool to its tool holder.
A2) Fix the tool holder equipped with its tool to the pre-setting rig.
A3) Identify the tool frame of reference; for example, two orthonormal axes Ox, Oy corresponding to two perpendicular faces of the tool.
A4) Choose, from the tool frame of reference, the coordinates of at least two points $P_1$ and $P_2$ corresponding to identification features that are to be used to identify the location of the tool. These points are chosen on a horizontal face of the tool or of the tool holder in a region such that they can lie immediately in the field of view of the camera of the machine when the tool holder is mounted in the chuck of the machine, or can be brought into its field of view by a rotation of the axis C.
A5) The camera of the pre-setting rig identifies, for each of the points $P_1$, $P_2$, the characteristic respective textures of these points.
A6) Transmit the coordinates of the points ($P_1$x, $P_1$y), ($P_2$x, $P_2$y), in the tool frame of reference, and the associated textures, to the numerical control of the machine.

List of operations on the electrical discharge machine:

A7) Fix the tool holder equipped with its tool into the chuck of the machine.
A8) Rotate the axis C until the camera recognizes in its field of view the texture associated with the point $P_1$.
A9) Stop rotating.
A10) The camera recognizes the texture associated with the point $P_1$ and assigns it the coordinates ($P_1$'x, $P_1$'y) in the machine frame of reference. To do this, a change of coordinates is needed because of the rotation of the axis C.

A11) Transmit the coordinates ($P_1$'x, $P_1$'y) to the numerical control of the electrical discharge machine. A12) Re-run from step A8 so that the camera can recognize point $P_2$, etc.

A13) From the coordinates ($P_1$x, $P_1$y), ($P_2$x, $P_2$y) in the tool frame of reference, and from the coordinates ($P_1$'x, $P_1$'y), ($P_2$'x, $P_2$'y) in the machine frame of reference, the numerical control of the machine is capable of using known methods to locate the tool in the machine frame of reference, that is to say:

> to correct the positioning errors caused by the attachment between the tool holder and the chuck which are manifested in a translational and a rotational movement in the horizontal plane
> to evaluate the thermal deviations experienced by the tool since the time it was measured on the pre-setting rig.

A14) The tool is used to machine the workpiece.

A15) If the tool and its tool holder need to be removed, operations are re-run from step A7 to guarantee exact repositioning.

B) Procedure for setting up the tool without an axis C

List of operations on the pre-setting rig:

B1) Fix the tool to its tool holder.

B2) Fix the tool holder equipped with its tool to the pre-setting rig.

B3) Identify the tool frame of reference; for example, two orthonormal axes Ox, Oy corresponding to two perpendicular faces of the tool.

B4) Choose, from the tool frame of reference, the coordinates of two points $P_1$ and $P_2$ that are to be used to identify the location of the tool. These points are chosen on a horizontal face of the tool or of the tool holder in a region such that they can lie immediately in the field of view of the camera of the machine when the tool holder is mounted on the chuck of the machine. The field of view of the camera is a circle approximately 3 mm in diameter. The points $P_1$ and $P_2$ need to be close enough together that they can be seen by the camera at the same time.

B5) The camera of the pre-setting rig identifies, for each of the points $P_1$, $P_2$, the characteristic textures of these points.

B6) Transmit the coordinates of the points ($P_1$x, $P_1$y), ($P_2$x, $P_2$y), in the tool frame of reference, and the associated textures, to the numerical control of the machine.

List of operations on the electrical discharge machine:

B7) Fix the tool holder equipped with its tool into the chuck of the machine.

B8) The camera recognizes the textures associated with the points $P_1$ and $P_2$ and assigns them the coordinates ($P_1$'x, $P_1$'y), ($P_2$'x, $P_2$'y) in the machine frame of reference.

B9) Transmit the coordinates ($P_1$'x, $P_1$'y), ($P_2$'x, $P_2$'y) to the numerical control of the machine.

B10) From the coordinates ($P_1$x, $P_1$y), ($P_2$x, $P_2$y) in the tool frame of reference, ($P_1$'x, $P_1$'y), ($P_2$'x, $P_2$'y) in the machine frame of reference, the numerical control of the machine is able using known methods to locate the tool in the machine frame of reference. That is to say to correct the positioning errors caused by the attachment between the tool holder and the chunk which are manifested in a translational and rotational movement in the horizontal plane.

B11) If the tool and its tool holder have to be removed, operations are re-run from step B7 to guarantee exact repositioning.

C) Procedure for adjusting the workpiece

List of operations on the pre-setting rig:

C1) Fix the workpiece to its pallet,

C2) Fix the pallet supporting the workpiece to the pre-setting rig.

C3) Identify the workpiece frame of reference; for example two orthonormal axes Ox, Oy corresponding to two perpendicular faces of the workpiece.

C4) Choose in the workpiece frame of reference the coordinates of at least two points $P_{11}$ and $P_{12}$ corresponding to identification features to used to identify the workpiece. These points are chosen on a horizontal face of the workpiece or of the pallet.

C5) The camera of the pre-setting rig identifies, for each of the points $P_{11}$, $P_{12}$, the respective characteristic textures of these points.

C6) Transmit the coordinates of the points ($P_{11}$x, $P_{11}$y), ($P_{12}$x, $P_{12}$y) relating to the workpiece frame of reference and the associated textures to the numerical control of the machine.

List of operations on the electrical discharge machine:

C7) Fix the pallet supporting the workpiece to the table of the machine.

C8) With awareness of standard offsets, to within about 0.1 mm caused by the system of attachment between table and workpiece via the pallet, the numerical control calculates, in the machine frame of reference, the approximate position of the points $P_{11}$, $P_{12}$.

C9) Two options are available according to whether or not the machine is equipped with an axis C.

C9i) If no axis C, the tool holder has to be removed so that the camera can see the workpiece or the pallet.

C9ii) If there is an axis C, this axis needs to be oriented in such a way as to uncover the field of view of the camera, that is to say, for example, to position an orifice in the tool holder facing the objective lens of the camera so that the camera can look at the workpiece or the pallet along the predetermined optical axis.

C10) Move the axes X, Y, Z so that the camera recognizes in its field of view the texture associated with the point $P_{11}$ and can take a precise measurement.

C11) The camera recognizes the texture associated with the point $P_{11}$ and assigns it exact coordinates ($P_{11}$'x, $P_{11}$'y) in the machine frame of reference.

C12) Transmit the coordinates ($P_{11}$'x, $P_{11}$'y) to the numerical control.

C13) Re-run from step C10 so that the camera can recognize point $P_{12}$, etc.

C14) From the coordinates ($P_{11}$x, $P_n$y), ($P_{12}$x, $P_{12}$y) in the workpiece frame of reference, and from the coordinates ($P_{11}$'x, $P_{11}$'y), ($P_{12}$'x, $P_{12}$'y) in the machine frame of reference, the numerical control is able using known methods to exactly locate the workpiece in the machine frame of reference, that is to say:

- to evaluate and correct the positioning errors caused by the attachment between the workpiece and the pallet, the pallet and the table, which errors are manifested in a translational and rotational displacement in the horizontal plane
- to evaluate and correct the thermal deviations suffered by the workpiece and the pallet since the time they were measured on the pre-setting rig.

C15) Once the workpiece has been installed and precisely identified in the machining zone, it is possible periodically to interrupt machining and to re-run the procedure from step CI0 with the purpose of checking the slow deviations that may affect the geometry of the workpiece.

C16) The operator may need to interrupt machining in order to release the workpiece or the pallet from their attachments with a view to continuing machining either at another location on the table of the same machine, or using a different machine.

C17) Resumption of machining on the workpiece that has been moved and then fixed down again on the machine requires first of all that the workpiece be repositioned approximately in the machine frame of reference: the operator indicates approximately the offsets and rotation angle that the workpiece has experienced since the last operation on the machine.

C18) In order to relocate the workpiece exactly in the machine frame of reference, operations are re-run from step C8.

Of course the embodiments and variants described hereinabove are in no way limiting and can be modified in any way that is desirable within the context defined by the independent claims.

In particular, the machine for electrical discharge machining could have any other design. The machining tool could be of any type, shaped electrode, milling tube or rod, wire. The optical detection appliance could be of any kind other than a CCD camera, for example a laser instrument. The identification features could just as easily be formed by marks applied to the surface of the tool, of the workpiece, or of their attachment members.

In the case of a wire-type electrical discharge machine, the identification features $P_1$, $P_2$ could be viewed on a possibly retractable projecting portion secured to the upper wire guide acting as a tool holder.

In the case of a milling electrical discharge machine, the identification features $P_1$, $P_2$ could be situated on the device for mounting the milling electrode.

The invention is particularly well suited to machines for electrical discharge machining, because of the relative slowness of this method in comparison with other methods such as milling or turning using cutting tools for example. With electrical discharge machining it is conceivable for the progress of the machining to be interrupted in order to take measurements, perform calibrations or corrections without detracting from the overall profitability. This is arguable in the case of machining methods with a very high throughput, but nonetheless, in theory, the invention remains applicable to milling, turning, drilling, grinding machines and to machines that machine using an electrochemical process, etc.

The first and second assembly could be swopped over and so in a variant, at least part of the second assembly can be moved from a first position in which the optical detection appliance 51 views the said at least one first identification feature on the second assembly 42 along the said optical axis, into a second position in which the optical detection appliance 51 views the said at least one second identification feature on the first assembly 40 along the same optical axis.

## Claims

1. Machine for electrical discharge machining, comprising

   - a tool (37) to machine a workpiece (45) under the effect of erosive discharges,
   - a stand (12) and a mechanical assembly (X, Y, Z, C) making it possible to effect relative movements between the tool (37) and the workpiece (45),
   - a first assembly (41) comprising the tool (37) and tool attachment members (40) capable of being attached to a first part (30) of the machine,
   - a second assembly (42) comprising the workpiece (45) capable of being attached to a second part (11) of the machine,
   - **characterized in that** it has a detection device (50) comprising an optical detection appliance (51) fixed by means of an attachment to a part of the machine and adapted for viewing at least a first identification feature on the first assembly (41) along a predetermined optical axis (52) that is fixed with respect to the said attachment and to assign the coordinates to the first identification feature ,
   - whereby the optical detection appliance (51) is arranged so that it views at least one second identification feature on the second assembly (42) along the same predetermined optical axis (52) and to assign the coordinates to the second identification features,
   Wherein the machine further comprises a numerical controller, which is adapted based on the coordinates of the first assembly and the second assembly to evaluate any relative geometric deviation between the first and second assemblies (41, 42) and to correct this geometric deviation.

2. Machine according to Claim 1, **characterized in that** at least a part of the first assembly (41) is capable of being moved from a first position in which the optical detection appliance (51) views the said at least one first identification feature on the first assembly (40) along the said optical axis, into a second position in which the optical detection appliance (51) views the said at least one second identification feature on the second assembly (42) along the same optical axis.

3. Machine according to Claim 1, **characterized in that** at least a part of the second assembly (42) is capable of being moved from a first position in which the optical detection appliance (51) views the said at least one first identification feature on the second assembly (42) along the said optical axis, into a second position in which the optical detection appliance (51) views the said at least one second identification feature on the first assembly (40) along the same optical axis.

4. Machine according to the preceding claims, **characterized in that** the attachment members (40) comprise a tool holder (36, 36a, 36b) to which the tool (37) is fixed and which collaborates with mounting elements (57, 57a, 57b, 61) connected to a sliding block (30, 30b) mounted such that it can slide along an axis Z of the machine, the optical detection appliance (51) being fixed to the mounting elements (61) or to the sliding block (30, 30b) and capable of viewing along the same predetermined optical axis (52), on the one hand, at least the first identification feature situated on the tool (37) or on its tool holder (36, 36a, 36b) and, on the other hand, at least the second identification feature situated on the workpiece (45) or its fixing elements (46).

5. Machine according to Claim 4, **characterized in that** the mounting elements comprise a chuck (57) collaborating with the tool holder (36) and mounted so that it can rotate about an axis C parallel to the axis Z in a fixing piece (61) or on the sliding block (30), the optical detection appliance (51) being mounted on the fixing piece (61) or on the sliding block (30) and capable of identifying, along the same predetermined optical axis (52), the first and second identification features through openings or cutouts (64, 65, 64a, 65a) provided in the chuck (57) and/or the tool holder (36).

6. Machine according to Claim 4, **characterized in that** the tool holder (36a) has at least one projecting portion (72, 73) capable of occupying a position facing the optical detection appliance (51a), the said first identification feature being situated on this projecting portion.

7. Machine according to Claim 6, **characterized in that** the tool holder (36a) is mounted on a chuck (57a) that can rotate about an axis C parallel to the axis Z, the projecting portion or portions (72, 73) being capable of occupying at least one second angular position in which they do not face the optical detection appliance (51a) so that the latter is capable of viewing the said at least one second identification feature situated on the second assembly (42).

8. Machine according to Claim 4, **characterized in that** the mounting elements comprise a plurality of rods (80) intended to fit into corresponding orifices (81), the optical detection appliance (51b) being positioned at the middle of these orifices and rods, the tool holder (36b) being equipped with a through-opening (83) designed such that the optical detection appliance (51b) is capable of looking directly at the tool (37) through this through-opening (83).

9. Machine according to one of Claims 1 to 8, **characterized in that** the first and/or second assemblies (41, 42) are mounted such that they can rotate about an axis of rotation C so that at least two identification features can be viewed in succession on the first and/or the second assembly (41, 42) along the same optical axis (52) so as to permit the detection of homothetic deformations of the tool (37) and of its attachment members (40) and/or of the workpiece (45) and of its fixing elements (46).

10. Machine according to one of the preceding claims, **characterized in that** the optical detection appliance (51, 51a, 51b) is a CCD camera.

11. Positioning method for a machine for electrical discharge machining comprising,

 - a tool (37) intended to machine a workpiece (45) under the effect of electrical erosive discharges,
 - a stand (12) and a mechanical assembly (X, Y, Z, C) making it possible to effect relative movements between the tool (37) and the workpiece (45),
 - a first assembly (41) comprising the tool (37) and attachment members (40) for attaching the tool (37) to a first part (30) of the machine,
 - a second assembly (42) comprising the workpiece (45) and fixing elements (46) for fixing the workpiece (45) to a second part (11) of the machine,
 - **characterized in that** the position of the tool (37) and of the workpiece (45) on the machine is checked using a detection device (50) comprising an optical detection appliance (51) by viewing at least one first identification feature ($P_1$, $P_2$) situated on the first assembly (41) along a predetermined optical axis (52) and by viewing at least one second identification feature ($P_{11}$, $P_{12}$) situated on the second assembly (42) along the same pre-determined optical axis (52)
 and the coordinates are assigned to the first and the second identification features,
 and a numerical controller is used to detect any relative geometric deviation between the first and second assembly (41, 42) and to correct this geometric deviation.

12. Machine according to Claim 11, **characterized in that** the first and second identification features are viewed along the same predetermined optical axis (52) through openings (64, 64a, 65, 65b) provided in the attachment members (40).

13. Machine according to Claim 11, **characterized in that** the first identification feature situated on at least one projecting portion (72, 73) secured to the attachment members (40) is viewed.

14. Method according to one of Claims 11 to 13, **characterized in that** at least one first and one second identification feature are viewed in succession on the first and/or the second assembly (41, 42) along the same optical axis (52) by rotating the first and/or the second assembly (41, 42) through a predetermined angle about an axis of rotation C so as to permit detection of homothetic deformations of the tool (37) and of its attachment members (40) and/or of the workpiece (45) and of its fixing elements (46).

**15.** Method according to one of Claims 11 to 14, **characterized in that** a correction is applied to the points (O) of the workpiece and/or of the tool by calculating a mean deviation ($\vec{V}_p$) from geometric deviations ($\vec{V}_1$, $\vec{V}_2$, $\vec{V}_3$) measured for at least two initial target points ($P_1$, $P_2$, $P_3$) corresponding to the said identification features.

**16.** Method according to Claim 15, **characterized in that** the said mean deviation ($\vec{V}_p$) is a harmonic type or quadratic type of the geometric deviations ($\vec{V}_1$, $\vec{V}_2$, $\vec{V}_3$) measured for the said initial target points ($P_1$, $P_2$, $P_3$) corresponding to the said identification features.

**Patentansprüche**

**1.** Maschine für funkenerosives Bearbeiten, Folgendes umfassend

- ein Werkzeug (37) zur Bearbeitung eines Werkstücks (45) unter der Einwirkung von Funkenerosion, einen Ständer (12) und eine mechanische Anordnung (X, Y, Z, C), die es ermöglichen, relative Bewegungen zwischen dem Werkzeug (37) und dem Werkstück (45) zu bewirken,
- eine erste Anordnung (41), die das Werkzeug (37) und Werkzeugbefestigungselemente (40), die an einem ersten Teil (30) der Maschine befestigt werden können, umfasst,
- eine zweite Anordnung (42), die das Werkstück (45), das an einem zweiten Teil (11) der Maschine befestigt werden kann, umfasst,
- **dadurch gekennzeichnet, dass** sie eine Detektionsvorrichtung (50) aufweist, die eine optische Detektionseinrichtung (51) umfasst, die über eine Befestigung an einem Teil der Maschine fixiert ist und dazu angepasst ist, mindestens ein erstes Identifizierungsmerkmal der ersten Anordnung (41) entlang einer vorgegebenen optischen Achse (52), die in Bezug zur Befestigung fixiert ist, zu betrachten und dem ersten Identifizierungsmerkmal die Koordinaten zuzuweisen,
- wobei die optische Detektionseinrichtung (51) so angeordnet ist, dass sie mindestens ein zweites Identifizierungsmerkmal auf der zweiten Anordnung (42) entlang derselben vorgegebenen optischen Achse (52) betrachtet und den zweiten Identifizierungsmerkmalen die Koordinaten zuweist, wobei die Maschine ferner eine numerische Steuerung umfasst, die auf Grundlage der Koordinaten der ersten Anordnung und der zweiten Anordnung dazu angepasst ist, sämtliche relative geometrische Abweichung zwischen der ersten und zweiten Anordnung (41, 42) auszuwerten und diese geometrische Abweichung zu korrigieren.

**2.** Maschine nach Anspruch 1, **dadurch gekennzeichnet, dass** mindestens ein Teil der ersten Anordnung (41) von einer ersten Position, in der die optische Detektionseinrichtung (51) das mindestens eine erste Identifizierungsmerkmal auf der ersten Anordnung (40) entlang der optischen Achse betrachtet, in eine zweite Position, in der die optische Detektionseinrichtung (51) das mindestens eine zweite Identifizierungsmerkmal auf der zweiten Anordnung (42) entlang derselben optischen Achse betrachtet, bewegt werden kann.

**3.** Maschine nach Anspruch 1, **dadurch gekennzeichnet, dass** mindestens ein Teil der zweiten Anordnung (42) von einer ersten Position, in der die optische Detektionseinrichtung (51) das mindestens eine erste Identifizierungsmerkmal auf der zweiten Anordnung (42) entlang der optischen Achse betrachtet, in eine zweite Position, in der die optische Detektionseinrichtung (51) das mindestens eine zweite Identifizierungsmerkmal auf der ersten Anordnung (40) entlang derselben optischen Achse betrachtet, bewegt werden kann.

**4.** Maschine nach einem der vorstehenden Ansprüche, **dadurch gekennzeichnet, dass** die Befestigungselemente (40) eine Werkzeughalterung (36, 36a, 36b) umfassen, an der das Werkzeug (37) fixiert ist und die mit Montageelementen (57, 57a, 57b, 61) zusammenwirkt, die mit einem Gleitstück (30, 30b) verbunden sind, sodass es entlang einer Achse Z der Maschine gleiten kann, wobei die optische Detektionseinrichtung (51) an den Montageelementen (61) oder am Gleitstück (30, 30b) fixiert ist und einerseits auf derselben vorgegebenen optischen Achse (52) mindestens das erste Identifizierungsmerkmal, das sich auf dem Werkzeug (37) oder auf seinem Werkzeughalter (36, 36a, 36b) befindet, und andererseits mindestens das zweite Identifizierungsmerkmal, das sich auf dem Werkstück (45) oder seinen Fixierungselementen (46) befindet, betrachten kann.

**5.** Maschine nach Anspruch 4, **dadurch gekennzeichnet, dass** die Montageelemente ein Spannfutter (57) umfassen, das mit der Werkzeughalterung (36) zusammenwirkt und so montiert ist, dass es sich um eine Achse C parallel zur Achse Z in einem Fixierungsteil (61) oder auf dem Gleitstück (30) drehen kann, wobei die optische Detektionseinrichtung (51) auf dem Fixierungsteil (61) oder auf dem Gleitstück (30) montiert ist und entlang derselben vorgegebenen optischen Achse (52) das erste und zweite Identifizierungsmerkmal durch Öffnungen oder Aussparungen (64, 65, 64a, 65a) im Spannfutter (57) und/oder in der Werkzeughalterung (36) identifizieren kann.

6. Maschine nach Anspruch 4, **dadurch gekennzeichnet, dass** die Werkzeughalterung (36a) mindestens einen vorstehenden Abschnitt (72, 73) aufweist, der eine Position, die der optischen Detektionseinrichtung (51a) zugewandt ist, einnehmen kann, wobei sich das erste Identifizierungsmerkmal auf dem vorstehenden Abschnitt befindet.

7. Maschine nach Anspruch 6, **dadurch gekennzeichnet, dass** die Werkzeughalterung (36a) auf einem Spannfutter (57a) montiert ist, das sich um eine Achse C parallel zur Achse Z drehen kann, wobei der vorstehende Abschnitt oder die vorstehenden Abschnitte (72, 73) mindestens eine zweite Winkelposition einnehmen können, in der sie von der optischen Detektionseinrichtung (51a) abgewandt sind, sodass diese das mindestens eine zweite Identifizierungsmerkmal, das sich auf der zweiten Anordnung (42) befindet, betrachten kann.

8. Maschine nach Anspruch 4, **dadurch gekennzeichnet, dass** die Montageelemente mehrere Stäbe (80) umfassen, die dazu ausgelegt sind, in zugehörige Öffnungen (81) zu passen, wobei die optische Detektionseinrichtung (51b) in der Mitte dieser Öffnungen und Stäbe angeordnet ist, wobei die Werkzeughalterung (36b) mit einer Durchgangsbohrung (83) versehen ist, die so ausgestaltet ist, dass die optische Detektionseinrichtung (51b) durch diese Durchgangsbohrung (83) direkt auf das Werkzeug (37) sehen kann.

9. Maschine nach einem der Ansprüche 1 bis 8, **dadurch gekennzeichnet, dass** die erste und/oder zweite Anordnung (41, 42) so montiert sind, dass sie sich um eine Drehachse C drehen können, sodass mindestens zwei Identifizierungsmerkmale nacheinander auf der ersten und/oder zweiten Anordnung (41, 42) entlang derselben optischen Achse (52) betrachtet werden können, sodass homothetische Verformungen des Werkzeugs (37) und seiner Befestigungselemente (40) und/oder des Werkstücks (45) und seiner Fixierungselemente (46) erkannt werden können.

10. Maschine nach einem der vorstehenden Ansprüche, **dadurch gekennzeichnet, dass** die optische Detektionseinrichtung (51, 51a, 51b) eine CCD-Kamera ist.

11. Positionierungsverfahren für eine Maschine für funkenerosives Bearbeiten, Folgendes umfassend

- ein Werkzeug (37) zur Bearbeitung eines Werkstücks (45) unter der Einwirkung von Funkenerosion,
- einen Ständer (12) und eine mechanische Anordnung (X, Y, Z, C), die es ermöglichen, relative Bewegungen zwischen dem Werkzeug (37) und dem Werkstück (45) zu bewirken,
- eine erste Anordnung (41), die das Werkzeug (37) und Befestigungselemente (40), um das Werkzeug (37) an einem ersten Teil (30) der Maschine zu befestigen, umfasst,
- eine zweite Anordnung (42), die das Werkstück (45) und Fixierungselemente (46), um das Werkstück (45) an einem zweiten Teil (11) der Maschine zu fixieren, umfasst,
- **dadurch gekennzeichnet, dass** die Position des Werkzeugs (37) und des Werkstücks (45) auf der Maschine mittels einer Detektionsvorrichtung (50), die eine optische Detektionseinrichtung (51) umfasst, durch Betrachten mindestens eines ersten Identifizierungsmerkmals ($P_1$, $P_2$), das sich auf der ersten Anordnung (41) entlang einer vorgegebenen optischen Achse (52) befindet, und durch Betrachten mindestens eines zweiten Identifizierungsmerkmals ($P_{11}$, $P_{12}$), das sich auf der zweiten Anordnung (42) entlang derselben vorgegebenen optischen Achse (52) befindet, überprüft wird
und die Koordinaten dem ersten und zweiten Identifizierungsmerkmal zugewiesen werden
und eine numerische Steuerung verwendet wird, um jegliche relative geometrische Abweichung zwischen der ersten und zweiten Anordnung (41, 42) zu erkennen und diese geometrische Abweichung zu korrigieren.

12. Maschine nach Anspruch 11, **dadurch gekennzeichnet, dass** das erste und zweite Identifizierungsmerkmal entlang derselben vorgegebenen optischen Achse (52) durch in den Befestigungselementen (40) bereitgestellte Öffnungen (64, 64a, 65, 65b) betrachtet werden.

13. Maschine nach Anspruch 11, **dadurch gekennzeichnet, dass** das erste Identifizierungsmerkmal, das sich auf mindestens einem an den Befestigungselementen (40) befestigten, vorstehenden Abschnitt (72, 73) befindet, betrachtet wird.

14. Verfahren nach einem der Ansprüche 11 bis 13, **dadurch gekennzeichnet, dass** mindestens ein erstes und ein zweites Identifizierungsmerkmal nacheinander auf der ersten und/oder zweiten Anordnung (41, 42) entlang derselben optischen Achse (52) betrachtet werden, indem die erste und/oder zweite Anordnung (41, 42) durch einen vorgegebenen Winkel um eine Drehachse C gedreht wird, um das Erkennen homothetischer Verformungen des Werkzeugs (37) und seiner Befestigungselemente (40) und/oder des Werkstücks (45) und seiner Fixierungselemente (46) zu ermöglichen.

15. Verfahren nach einem der Ansprüche 11 bis 14, **dadurch gekennzeichnet, dass** auf die Punkte (O) des Werkstücks und/oder des Werkzeugs eine Korrektur ausgeübt wird, indem eine mittlere Abweichung ($\vec{V}_p$) von geometrischen Abweichungen ($\vec{V}_1, \vec{V}_2, \vec{V}_3$) für mindestens zwei anfängliche Zielpunkte (P$_1$, P$_2$, P$_3$), die den Identifizierungsmerkmalen entsprechen, berechnet wird.

16. Verfahren nach Anspruch 15, **dadurch gekennzeichnet, dass** die mittlere Abweichung ($\vec{V}_p$) harmonischer oder quadratischer Art der geometrischen Abweichungen ($\vec{V}_1, \vec{V}_2, \vec{V}_3$) ist, die für die anfänglichen Zielpunkte (P$_1$, P$_2$, P$_3$), die den Identifizierungsmerkmalen entsprechen, gemessen wurde.


**Revendications**

1. Machine d'usinage par électroérosion comprenant

   - un outil (37) destiné à usiner une pièce (45) sous l'effet de décharges érosives,
   - un bâti (12) et un ensemble mécanique (X,Y,Z,C) permettant d'effectuer des mouvements relatifs entre l'outil (37) et la pièce (45),
   - un premier ensemble (41) comprenant l'outil (37) et des organes d'attachement (40) de l'outil susceptibles d'être rattachés à une première partie (30) de la machine,
   - un second ensemble (42) comprenant la pièce (45) susceptible d'être rattachée à une seconde partie (11) de la machine,
   - **caractérisée par le fait qu'**elle possède un dispositif de détection (50) comprenant un appareil de détection optique (51) fixé au moyen d'un attachement à une partie de la machine et conçu pour visualiser au moins une première particularité de repérage sur le premier ensemble (41) selon un axe optique (52) prédéterminé fixé par rapport audit attachement et affecter les coordonnés à la première particularité de repérage,
   - l'appareil de détection optique (51) étant agencé de façon à visualiser au moins une seconde particularité de repérage sur le second ensemble (42) selon le même axe optique (52) prédéterminé et affecter les coordonnés à la deuxième particularité de repérage,
   la machine comprenant en outre un contrôleur numérique conçu pour évaluer, sur la base des coordonnés du premier ensemble et du second ensemble, toute dérive géométrique relative entre le premier et le second ensembles (41, 42) et corriger cette dérive géométrique.

2. Machine selon la revendication 1, **caractérisée en ce qu'**au moins une partie du premier ensemble (40) est susceptible d'être déplacée d'une première position dans laquelle l'appareil de détection optique (51) visualise ladite au moins une première particularité de repérage sur le premier ensemble (40) selon ledit axe optique, vers une seconde position dans laquelle l'appareil de détection optique (51) visualise ladite au moins une seconde particularité de repérage sur le second ensemble (42) selon le même axe optique.

3. Machine selon la revendication 1, **caractérisée en ce qu'**au moins une partie du second ensemble (42), est susceptible d'être déplacée d'une première position dans laquelle l'appareil de détection optique (51) visualise ladite au moins une première particularité de repérage sur le second ensemble (42) selon ledit axe optique, vers une seconde position dans laquelle l'appareil de détection optique (51) visualise ladite au moins une seconde particularité de repérage sur le premier ensemble (40) selon le même axe optique.

4. Machine selon les revendications précédentes, **caractérisée par le fait que** les organes d'attachement (40) comportent un porte-outil (36, 36a, 36b) sur lequel l'outil (37) est fixé et qui coopère avec des éléments de montage (57, 57a, 57b, 61) reliés à un coulisseau (30, 30b) monté coulissant selon un axe Z de la machine, l'appareil de détection optique (51) étant fixé sur les éléments de montage (61) ou sur le coulisseau (30, 30b) et susceptible de visualiser selon le même axe optique (52) prédéterminé d'une part au moins la première particularité de repérage située sur l'outil (37) ou sur son porte-outil (36, 36a, 36b) et d'autre part au moins la seconde particularité de repérage située sur la pièce (45) ou ses éléments de fixation (46).

**5.** Machine selon la revendication 4, **caractérisée par le fait que** les éléments de montage comportent un mandrin (57) coopérant avec le porte-outil (36) et monté tournant selon un axe C parallèle à l'axe Z dans une pièce de fixation (61) ou sur le coulisseau (30), l'appareil de détection optique (51) étant monté sur la pièce de fixation (61) ou sur le coulisseau (30) et susceptible de repérer, selon le même axe optique (52) prédéterminé les premières et secondes particularités de repérage à travers des ouvertures ou dégagements (64, 65, 64a, 65a) prévues dans le mandrin (57) et/ou le porte-outil (36).

**6.** Machine selon la revendication 4, **caractérisé par le fait que** le porte-outil (36a) présente au moins une portion saillante (72, 73) susceptible d'occuper une position en regard de l'appareil de détection optique (51a), ladite première particularité de repérage étant située sur cette portion saillante.

**7.** Machine selon la revendication 6, **caractérisée par le fait que** le porte-outil (36a) est monté sur un mandrin rotatif (57a) selon un axe C parallèle avec l'axe Z, la ou les portions saillantes (72, 73) étant susceptibles d'occuper au moins une seconde position angulaire dans laquelle elles ne sont pas en regard de l'appareil de détection optique (51a) de façon que ce dernier est susceptible de visualiser ladite au moins une seconde particularité de repérage située sur le second ensemble (42) .

**8.** Machine selon la revendication 4, **caractérisée par le fait que** les éléments de montage comportent une pluralité de tiges (80) destinées à s'encastrer dans des orifices correspondants (81), l'appareil de détection optique (51b) étant disposé au milieu de ces orifices et tiges, le porte-outil (36b) étant muni d'une ouverture traversante (83) agencée de façon que l'appareil de détection optique (51b) est susceptible de viser directement l'outil (37) à travers cette ouverture traversante (83).

**9.** Machine selon l'une des revendications 1 à 8, **caractérisée par le fait que** les premier et/ou second ensembles (41, 42) sont montés tournants autour d'un axe de rotation C de façon qu'au moins deux particularités de repérage puissent être visualisées successivement sur le premier et/ou le second ensemble (41, 42) selon le même axe optique (52) de manière à permettre la détection de déformations homothétiques de l'outil (37) et de ses organes d'attachement (40) et/ou de la pièce (45) et de ses éléments de fixation (46).

**10.** Machine selon l'une des revendications précédentes, **caractérisée par le fait que** l'appareil de détection optique (51, 51a, 51b) est une caméra CCD.

**11.** Procédé de positionnement pour machine d'usinage par électroérosion comprenant,

- un outil (37) destiné à usiner une pièce (45) sous l'effet de décharges électriques érosives,
- un bâti (12) et un ensemble mécanique (X, Y, Z, C) permettant d'effectuer des mouvements relatifs entre l'outil (37) et la pièce (45),
- un premier ensemble (41) comprenant l'outil (37) et des organes d'attachement (40) de l'outil (37) à une première partie (30) de la machine,
- un second ensemble (42) comprenant la pièce (45) et des éléments de fixation (46) de la pièce (45) à une seconde partie (11) de la machine,
- **caractérisé par le fait que** l'on contrôle le positionnement de l'outil (37) et de la pièce (45) sur la machine au moyen d'un dispositif de détection (50) comprenant un appareil de détection optique (51) en visualisant au moins une première particularité de repérage ($P_1$, $P_2$) située sur le premier ensemble (41) selon un axe optique (52) prédéterminé et en visualisant au moins une seconde particularité de repérage ($P_{11}$, $P_{12}$) située sur le second ensemble (42) selon le même axe optique (52) prédéterminé et les coordonnés sont affectées aux premières et secondes particularités de repérage
et un contrôleur numérique est utilisé pour détecter toute dérive géométrique relative entre le premier et le second ensemble (41, 42) et à corriger cette dérive géométrique.

**12.** Machine selon la revendication 11, **caractérisé en ce que** l'on visualise selon le même axe optique (52) prédéterminé les premières et secondes particularités de repérage à travers des ouvertures (64, 64a, 65, 65b) prévues dans les organes d'attachement (40).

**13.** Machine selon la revendication 11, **caractérisé en ce que** l'on visualise la première particularité de repérage située sur au moins une portion saillante (72, 73) solidaire des organes d'attachement (40).

**14.** Procédé selon l'une des revendications 11 à 13, **caractérisé en ce que** l'on visualise au moins une première et une seconde particularité de repérage successivement sur le premier et/ou le second ensemble (41, 42) selon le même axe optique (52) en tournant le premier et/ou le second ensemble (41, 42) d'un angle prédéterminé autour d'un axe de rotation C de façon à permettre la détection de déformations homothétiques de l'outil (37) et de ses organes d'attachement (40) et/ou de la pièce (45) et de ses éléments de fixation (46).

**15.** Procédé selon l'une des revendications 11 à 14, **caractérisé en ce que** l'on applique une correction aux points (O) de la pièce et/ou de l'outil en calculant une dérive moyenne ($\vec{V}_p$) à partir des dérives géométriques ($\vec{V}_1$, $\vec{V}_2$, $\vec{V}_3$) mesurées pour au moins deux points cibles initiaux ($P_1$, $P_2$, $P_3$) correspondant auxdites particularités de repérage.

**16.** Procédé selon la revendication 15, **caractérisé en ce que** ladite dérive moyenne ($\vec{V}_p$) est de type harmonique ou de type quadratique des dérives géométriques ($\vec{V}_1$, $\vec{V}_2$, $\vec{V}_3$) mesurées pour lesdits points cibles initiaux ($P_1$, $P_2$, $P_3$) correspondant auxdites particularités de repérage.

Fig.1

Fig.2

EP 2 181 791 B1

Fig.3a

Fig.3b

Fig.3c

Fig.4

Fig.5

Fig.6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 61061721 A